# FASCICULE DE BREVET EUROPEEN

(11) **EP 0 390 662 B1**
(45) Date de publication et mention de la délivrance du brevet: **25.08.1993**
(21) Numéro de dépôt: 90400811.7
(22) Date de dépôt: 23.03.1990
(51) Int. Cl.: H01S 3/101, H01S 3/23, G02F 1/35

(54) **Générateur laser de puissance avec contrôle de la direction d'émission du faisceau de sortie**
Hochleistungs-Laser mit Steuerung der Richtung der Ausgangsstrahlung
High power laser with output direction control

(30) Priorité: 31.03.1989 FR 8904258
(43) Date de publication de la demande: 03.10.1990
(73) Titulaire: THOMSON-CSF, 75008 Paris (FR)
(72) Inventeur: Ayral, Jean-Luc, F-92045 Paris la Défense (FR); Huignard, Jean-Pierre, F-92045 Paris la Défense (FR)
(74) Mandataire: Guérin, Michel

(56) Documents cités:
- EP-A- 0 292 353
- WO-A-83/04145
- US-A- 3 992 682
- US-A- 4 682 340

## Description

La présente invention concerne les générateurs laser de puissance dans lesquels il est possible de contrôler la direction angulaire des faisceaux de sortie.

Dans de nombreux domaines, par exemple la télémétrie et le guidage d'engins, on utilise le plus souvent, comme élément de référence, un faisceau laser dont la cohérence aussi bien temporelle que spatiale permet de définir un "trait fin et immatériel" sur un trajet relativement important.

Par exemple pour le guidage d'engins terrestres sur de courtes distances, on utilise un générateur laser du type "hélium-néon" de quelques milliwatts de puissance. Le faisceau défini par ce type de générateur est suffisamment fin pour être utilisé comme référence pour guider ou télémétrer. De plus, le générateur laser est suffisamment petit et peu encombrant pour permettre facilement l'orientation, suivant une direction donnée, de son faisceau de sortie. Il suffit, pour cela, de monter le générateur laser sur une platine et de déplacer cette platine, au moyen de moteurs, suivant deux ou trois axes. Cette mise en oeuvre ne donne cependant le résultat souhaité que si la vitesse de déplacement angulaire nécessaire n'est pas très importante.

Pour le guidage d'engins notamment terrestres devant se déplacer relativement rapidement, il a été réalisé des cellules de déflexion qui sont disposées sur le faisceau laser lui-même, en sortie du générateur laser, et commandées électriquement comme le sont par exemple les déflecteurs statiques acousto-optiques bien connus des hommes de l'art. L'avantage de ces déflecteurs est qu'ils répondent très rapidement aux ordres de déflexion qui leur sont donnés. Par contre, ils présentent un inconvénient majeur, celui de ne pouvoir dévier des faisceaux laser que faible puissance. En effet, dans le cas de la déviation de faisceaux de puissance, les déflecteurs sont très rapidement détériorés par ces faisceaux eux-mêmes et leur efficacité décroît de façon importante lorsque l'angle de déviation imposé augmente, c'est-à-dire que la puissance du faisceau dévié diminue en fonction de l'augmentation de l'angle de déviation.

EP-A-0 292 353 décrit un dispositif de contrôle angulaire d'un faisceau laser comprenant successivement un dispositif de déflexion commandable, un multiplexeur holographique, et un système d'obturateurs.

La présente invention a pour but de réaliser un générateur laser de puissance qui puisse émettre un faisceau laser dont la direction angulaire de sortie par rapport au générateur lui-même peut varier dans un champ angulaire important, tout en gardant les qualités, notamment spatiales et temporelles, des faisceaux laser émis par les générateurs connus de l'art antérieur.

Plus précisément, la présente invention a pour objet un générateur laser de puissance avec contrôle de la direction d'émission du faisceau de sortie, comportant, successivement sur un même axe optique de propagation du faisceau :
des moyens pour émettre un faisceau laser pilote d'une longueur d'onde donnée,
un déflecteur commandable,
un séparateur de faisceaux,
un milieu amplificateur laser à la longueur d'onde du faisceau pilote, et
un miroir non linéaire à conjugaison de phase,
ledit séparateur de faisceaux séparant le faisceau laser pilote du faisceau amplifié.

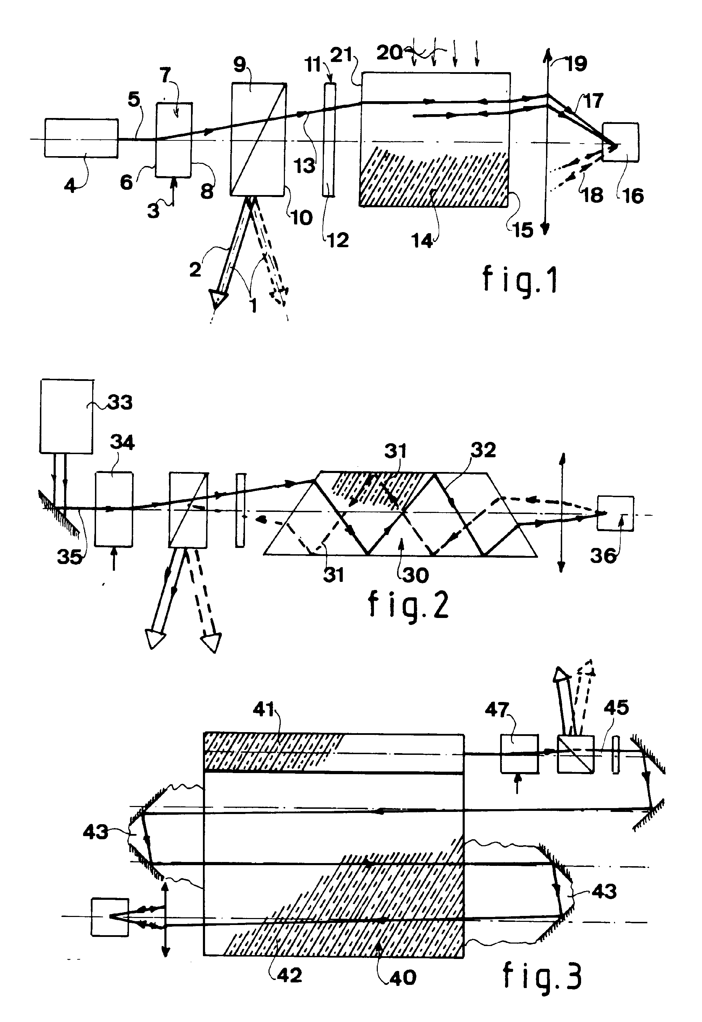

D'autres caractéristiques et avantages de la présente invention apparaîtront au cours de la description suivante donnée en regard des dessins annexés à titre illustratif, mais nullement limitatif, dans lesquels les figures 1 à 3 représentent de façon très schématique différents modes de réalisation d'un générateur laser selon l'invention.

La figure 1 représente un premier mode de réalisation d'un générateur laser de puissance dont la direction d'émission 1 du faisceau de sortie 2 est contrôlée en fonction d'un ordre de commande appliqué à une entrée de commande 3.

Ce générateur comporte des moyens 4 pour émettre un faisceau laser pilote 5 de faible puissance, mais de grande qualité, notamment de pointage, de mode d'oscillation et de stabilité. Ces moyens 4 sont par exemple constitués par un générateur laser oscillateur à cavité résonnante du type Fabry-Pérot.

Ce faisceau laser pilote 5 émis par le générateur 4 tombe sur la fenêtre d'entrée 6 d'un déflecteur 7 du type, par exemple, acousto-optique, comme une cellule de Bragg au TeO₂ ou au LiNbO₃. De tels éléments sont connus en eux-mêmes et ne seront pas plus amplement décrits ici. Après avoir traversé le déflecteur 7 et émergé par sa fenêtre de sortie 8, le faisceau laser pilote 5 traverse un séparateur 9 du type, par exemple, à polarisation. Dans ce cas, à la sortie 10 du séparateur 9 est disposé, sur le chemin optique du faisceau laser pilote, un polariseur 11, par exemple, une lame quart d'onde 12.

Le faisceau laser 13 obtenu en sortie de ce polariseur 11 est ensuite envoyé dans un milieu amplificateur laser 14 adapté à sa longueur d'onde. La sortie 15 de ce milieu amplificateur est couplée avec un miroir 16 constitué, selon une caractéristique de l'invention, par un milieu non linéaire dont la fonction est de conjuguer en phase l'onde incidente 17 issue du milieu amplificateur laser 14 avec l'onde réfléchie 18, de façon que, si l'onde incidente comporte des distorsions de phase, ce miroir dit "conjugué" renvoie une onde réfléchie comportant des distorsions de phase identiques à celles de l'onde incidente, au contraire des miroirs "classiques" qui, eux, renvoient une onde réfléchie comportant des distorsions opposées.

Or, au cours d'un passage dans le milieu amplificateur 14, l'onde subit des distorsions de phase dues, par exemple, à l'effet bien connu de lentille thermique lié au pompage 20 effectué dans ce milieu amplificateur. C'est ainsi qu'en général les rayons du faisceau situés au centre sont "en retard" par rapport à ceux de la périphérie et par rapport au sens du déplacement de l'onde.

Le miroir conjugué 16 renvoyant le faisceau avec la caractéristique telle que définie ci-dessus, les rayons qui étaient "en retard" se trouvent, avant d'entreprendre le second passage dans le milieu amplificateur 14, "en avance" de la même amplitude par rapport au sens de déplacement de cette onde réfléchie. Le second passage permet alors de compenser la distorsion due au premier passage et de restituer la qualité de phase de l'onde initiale, tout en amplifiant la puissance du faisceau.

Dans l'exemple illustré, les moyens de couplage 19 de la face de sortie 15 du milieu amplificateur 14 avec le miroir conjugué 16 sont constitués par une lentille de focalisation.

Le miroir conjugué 16 est constitué, lui, par un milieu non linéaire parfaitement adapté pour créer une onde conjuguée apte à compenser, notamment, les distorsions de phase de l'onde incidente. Ces milieux sont, par exemple, un gaz tel que du Méthane (CH₄), du Fluorure de Soufre (SF₆), etc., dans lesquels se développe l'effet Brillouin stimulé, ou des cristaux électro-optiques tels que l'Arséniure de Gallium (GaAs), ..... dans lesquels se développe l'effet photoréfractif.

Il est cependant à noter que, parmi les matériaux pour milieux non linéaires, ceux produisant un effet Brillouin stimulé sont avantageusement adaptés pour obtenir une compensation des distorsions de phase des faisceaux laser amplifiés qui fonctionnent en impulsions avec des puissances crête élevées, par exemple de 200 à 500 mJ pour des impulsions de 10 ns.

Le générateur laser dont la structure vient d'être décrite en regard de la figure 1 fonctionne de la façon suivante :

Le générateur laser pilote 4 délivre un faisceau laser 5 de faible puissance et de grande qualité. Ce faisceau laser pilote 5 est dévié, en fonction du signal de commande appliqué à l'entrée 3 du déflecteur 7, suivant la direction angulaire voulue. Cette déflexion s'effectue selon un principe connu en lui-même et son contrôle est assuré par celui de la fréquence du signal hyperfréquence appliqué, notamment, sur le cristal qui constitue l'élément essentiel du déflecteur 7.

Le faisceau ainsi dévié traverse librement le séparateur 9 qui se comporte, pour l'onde de ce faisceau incident, pratiquement comme une lame à face parallèles transmettant la quasi totalité du faisceau. Puis, il traverse une première fois la lame quart d'onde 12. Il est ensuite amplifié par un premier passage dans le milieu amplificateur 14 et par un second en sens contraire, après réflexion sur le miroir conjugué 16 qui permet, comme explicité ci-avant, la correction des distorsions dues à l'amplification.

Le faisceau laser traverse ensuite une seconde fois la lame quart d'onde 12 avant de pénétrer à nouveau dans le séparateur 9. Comme le faisceau traverse deux fois la lame quart d'onde, au cours du premier passage, il est polarisé circulairement puis, au cours du second passage, rectilignement à quatre-vingt-dix degrés de l'onde incidente. Le séparateur 9, notamment par discrimination de la polarisation, peut ainsi dévier complètement vers la sortie du générateur un faisceau laser de forte puissance 2, en l'empêchant de tomber sur le déflecteur commandable 7, ce qui évite de l'endommager ou de le détériorer.

La déviation angulaire imposée par le déflecteur 7 au faisceau incident de faible puissance 5 et existant à l'entrée du milieu amplificateur 14 se retrouve identique à la sortie du séparateur 9, cet état de fait se démontrant très aisément à l'aide de la construction géométrique de la propagation des faisceaux dans les différents milieux.

La figure 2 représente un deuxième mode de réalisation d'un générateur laser selon l'invention qui, dans son principe, est identique à celui selon la figure 1, mais dans lequel le milieu amplificateur laser 30 est du type "Slab" assurant, après une pluralité de réflexions 31 du faisceau 32, une très bonne homogénéité du gain dans l'amplification du faisceau.

Ce type de générateur est particulièrement adapté pour des milieux amplificateurs laser solides, par exemple des barreaux ou des plaques au Néodyme ou du type YAG (Grenat d'Ytrium d'Aluminium), ces configurations étant en particulier compatibles avec un multipassage d'une onde incidente d'une longueur d'onde voisine de 1,06 micromètre.

Avec un générateur laser tel qu'illustré sur la figure 2, la Demanderesse a réalisé un prototype dans lequel le laser pilote 33 est un laser pompé à diodes d'une énergie de 2mJ pour des durées d'impulsions de 10 ns avec un taux de répétition égal à une dizaine de Hertz.

Le déflecteur acousto-optique 34 est une cellule de Bragg TeO₂ ou LiNbO₃ qui possède une résolution de 10³ points, avec une déflexion angulaire de ±30° pour un diamètre de faisceau laser 35 de l'ordre de 1 mm, ou de ±3° pour un diamètre de faisceau de l'ordre de 10 mm, l'efficacité de la déflexion atteignant facilement plus de 50%.

Le milieu amplificateur 30 est un Nd-YAG pompé optiquement par lampe flash ou par réseau de lasers semi-conducteurs, le gain étant, dans le prototype établi, de 20 db et permettant d'obtenir après deux passages du faisceau laser une énergie de sortie égale à 200 mJ.

Quant au miroir conjugué 36, il est constitué par une cellule de Brillouin au CH₄ autopompée et dans des conditions de réflexion optimisées à une longueur d'onde égale à 1,06 micromètre, le gaz CH₄ y étant à une pression de 100 bars et le coefficient de réflectivité étant alors supérieur à 80%.

La figure 3 représente un troisième mode de réalisation d'un générateur laser selon l'invention identique, dans son principe de base, aux deux modes de réalisation décrit ci-avant, mais dans lequel le milieu amplificateur laser 40 est constitué par une deuxième partie 42 d'une "plaque laser" dont la première partie 41 constitue le générateur laser pilote lui-même, par exemple un Nd-YAG. Dans ce cas-là, la plaque laser est d'une section relativement importante et l'amplification est obtenue par un multipassage, dans la deuxième partie 42, du faisceau dévié par le déflecteur 47, ce multipassage étant réalisé par des réflexions multiples sur des miroirs 43, ou prismes à réflexion totale, extérieurs à la plaque laser.

Dans le mode de réalisation illustré, la deuxième partie 42 de la plaque laser 40 est traversée six fois par la partie du faisceau laser pilote déviée 45. L'un des avantages de cette configuration est qu'elle permet d'obtenir, avec une plaque laser relativement courte, un milieu amplificateur laser très long, par exemple d'une longueur triple pour le mode illustré sur la figure 3.

Ces trois structures pour générateur laser selon l'invention permettent d'obtenir une auto-correction des distorsions de phase induites dans tout milieu amplificateur à fort gain, notamment par l'effet de lentille thermique. L'onde conjuguée est générée rigoureusement dans la même direction que l'onde incidente, même pour un débattement angulaire égal à ±30°. La déflexion angulaire du faisceau pilote de faible énergie est transférée au faisceau de puissance et l'onde amplifiée défléchie a les mêmes qualités spatiales que l'onde pilote incidente.

Les configurations décrites sont bien entendu compatibles avec tout autre moyen de déflexion angulaire du faisceau incident, par exemple un dispositif opto-mécanique et/ou électro-optique. De même, une déflexion bidimensionnelle du faisceau est obtenue en insérant, dans la cavité, un dispositif de déviation X-Y, par exemple deux cellules acousto-optiques croisées.

## Revendications

1. Générateur laser de puissance avec contrôle de la direction d'émission (1) du faisceau de sortie (2), comportant successivement sur un même axe optique de propagation du faisceau :
des moyens (4) pour émettre un faisceau laser pilote (5) d'une longueur d'onde donnée,
un déflecteur commandable (7),
un séparateur de faisceaux (9),
un milieu amplificateur laser (14) à la longueur d'onde du faisceau pilote, et
un miroir non linéaire à conjugaison de phase (16),
ledit séparateur de faisceaux séparant le faisceau laser pilote du faisceau amplifié.

2. Générateur laser selon la revendication 1, caractérisé par le fait que les moyens (4) pour émettre un faisceau laser pilote (5) d'une longueur d'onde donnée comportent un générateur laser pilote délivrant un faisceau de faible puissance ayant une bonne qualité de pointage, de mode d'oscillation et de stabilité.

3. Générateur laser selon l'une des revendications 1 et 2, caractérisé par le fait que ledit déflecteur commandable (7) est constitué par une déflecteur du type acousto-optique.

4. Générateur selon la revendication 3, caractérisé par le fait que ledit déflecteur acousto-optique est une cellule de Bragg notamment au TeO₂ ou au LiNbO₃.

5. Générateur selon l'une des revendications précédentes, caractérisé par le fait que ledit séparateur de faisceaux (9) est constitué par un séparateur à polarisation et un polariseur (11) tel qu'une lame quart d'onde (12).

6. Générateur selon l'une des revendications précédentes, caractérisé par le fait que ledit miroir non linéaire à conjugaison de phase (16) est constitué par un milieu non linéaire.

7. Générateur selon la revendication 6, caractérisé par le fait que ledit milieu non linéaire est constitué par au moins l'un des éléments suivant : un gaz tel que du Méthane (CH₄), du Fluorure de Soufre (SF₆) dans lesquels se développe l'effet Brillouin stimulé, des cristaux électro-optiques tels que l'Arséniure de Gallium (GaAs) dans lesquels se développe l'effet photoréfractif.

8. Générateur selon l'une des revendications précédentes, caractérisé par le fait que ledit milieu amplificateur laser (14) est du type "Slab" (30).

9. Générateur selon l'une des revendications 1 à 7, caractérisé par le fait que ledit milieu amplificateur laser (40) est constitué par une deuxième partie (42) d'une "plaque laser" dont la première partie (41) constitue le générateur laser pilote, ladite plaque laser étant d'une section relativement importante et l'amplification étant obtenue par un multipassage du faisceau dévié dans la deuxième partie (42), le multipassage du faisceau étant réalisé par des réflexions multiples sur des miroirs (43), ou prismes à réflexion totale, extérieurs à la plaque laser.

10. Générateur laser selon l'une des revendications 1 à 9, caractérisé par le fait qu'il comporte des moyens de couplage (19) de la face de sortie (15) du milieu amplificateur (14) avec le miroir non linéaire à conjugaison de phase (16), cesdits moyens étant constitués par une lentille de focalisation.

## Patentansprüche

1. Leistungslasergenerator mit Kontrolle der Emissionsrichtung (1) des Ausgangsstrahles (2), der nacheinander auf ein und derselben optischen Fortpflanzungsachse des Strahles aufweist:
Mittel (4), um einen Leitlaserstrahl (5) mit einer gegebenen Wellenlänge zu emittieren,
eine steuerbare Ablenkeinrichtung (7),
einen Strahlenseparator (9),
ein bei der Wellenlänge des Leitstrahles verstärkendes Laserverstärkermedium (14),
einen nichtlinearen Spiegel (16) mit Phasenkonjugation, wobei der Strahlenseparator den Leitlaserstrahl von dem verstärkten Strahl trennt.

2. Lasergenerator nach Anspruch 1, dadurch gekennzeichnet, daß die Mittel (4) zum Emittieren eines Leitlaserstrahles (5) mit einer gegebenen Wellenlänge einen Leitlasergenerator aufweisen, der einen Strahl mit geringer Leistung bei guter Ausrichtungs-, Schwingungsart- und Stabilitätsqualität liefert.

3. Lasergenerator nach einem der Ansprüche 1 und 2, dadurch gekennzeichnet, daß die steuerbare Ablenkeinrichtung (7) durch eine Ablenkeinrichtung des akustooptischen Typs gebildet ist.

4. Generator nach Anspruch 3, dadurch gekennzeichnet, daß die akustooptische Ablenkeinrichtung eine Bragg-Zelle, insbesondere mit TeO₂ oder LiNbO₃ ist.

5. Generator nach einem der vorhergehenden Ansprüche, dadurch gekennzeichnet, daß der Strahlenseparator (9) durch einen Polarisations-Separator und einen Polarisator (11) wie eine Lambda-Viertelplatte (12) gebildet ist.

6. Generator nach einem der vorhergehenden Ansprüche, dadurch gekennzeichnet, daß der nichtlineare Spiegel (16) mit Phasenkonjugation durch ein nichtlineares Medium gebildet ist.

7. Generator nach Anspruch 6, dadurch gekennzeichnet, daß das nichtlineare Medium durch wenigstens eines der folgenden Elemente gebildet ist: ein Gas wie Methan (CH₄), Schwefelfluorid (SF₆), in denen sich der stimulierte Brillouin-Effekt entwickelt, elektrooptische Kristalle wie Galliumarsenid (GaAs), in denen sich der Lichtbrechungseffekt entwickelt.

8. Generator nach einem der vorhergehenden Ansprüche, dadurch gekennzeichnet, daß das Laserverstärkermedium (14) vom "Slab"-Typ (30) ist.

9. Generator nach einem der Ansprüche 1 bis 7, dadurch gekennzeichnet, daß das Laserverstärkermedium (40) durch einen zweiten Teil (42) einer "Laserplatte" gebildet ist, deren erster Teil (41) den Leitlasergenerator bildet, wobei die Laserplatte einen relativ großen Querschnitt aufweist und die Verstärkung durch einen Mehrfachdurchgang des in den zweiten Teil (42) abgelenkten Strahles erhalten wird, wobei der Mehrfachdurchgang des Strahles durch mehrmalige Reflexionen an Spiegeln (43) oder Prismen mit Totalreflexion außerhalb der Laserplatte realisiert wird.

10. Lasergenerator nach einem der Ansprüche 1 bis 9, dadurch gekennzeichnet, daß er Mittel (19) zum Koppeln der Ausgangsfläche (15) des Verstärkermediums (14) mit dem nichtlinearen Spiegel (16) mit Phasenkonjugation aufweist, wobei diese Mittel durch eine Fokussierungslinse gebildet sind.

## Claims

1. Laser power generator with control of the emission direction (1) of the output beam (2), comprising, in succession, on the same optical propagation axis of the beam:
means (4) for emitting a pilot laser beam (5) of a given wavelength,
a controllable deflector (7),
a beam splitter (9),
a laser amplifier medium (14), at the wavelength of the pilot beam, and
a non-linear phase-conjugation mirror (16), the said beam splitter separating the pilot laser beam from the amplified beam.

2. Laser generator according to Claim 1, characterised in that the means (4) for emitting a pilot laser beam (5) of a given wavelength comprise a pilot laser generator delivering a low-power beam having good aiming, oscillation-mode and stability qualities.

3. Laser generator according to either Claims 1 or 2, characterised in that the said controllable deflector (7) is constituted by an acoustooptic-type deflector.

4. Generator according to Claim 3, characterised in that the said acoustooptic deflector is a Bragg cell, especially a TeO₂ or LiNbO₃.

5. Generator according to one of the preceding claims, characterised in that the said beam splitter (9) is constituted by a polarisation splitter and a polariser (11) such as a quarter-wave plate (12).

6. Generator according to one of the preceding claims, characterised in that the said non-linear phase-conjugation mirror (16) is constituted by a non-linear medium.

7. Generator according to Claim 6, characterised in that the said non-linear medium is constituted by at least one of the following elements: a gas such as methane (CH₄) or sulphur hexafluoride (SF₆), in which gases the stimulated Brillouin effect develops, and electrooptic crystals, such as gallium arsenide (GaAs), in which crystals the photorefractive effect develops.

8. Generator according to one of the preceding claims, characterised in that the said laser amplifier medium (14) is of the "slab" type (30).

9. Generator according to one of Claims 1 to 7, characterised in that the said laser amplifier medium (40) is constituted by a second part (42) of a "laser plate", the first part (41) of which constitutes the pilot laser generator, the said laser plate having a relatively large cross-section and the amplification being obtained by multipassing of the beam deflected in the second part (42), the multipassing of the beam being produced by multiple reflections on mirrors (43) or total-reflection prisms, external to the laser plate.

10. Laser generator according to one of Claims 1 to 9, characterised in that it comprises means (19) for coupling the exit face (15) of the amplifier medium (14) with the non-linear phase-conjugation mirror (16), these said means being constituted by a focusing lens.
